# DEMANDE DE BREVET EUROPEEN

(11) **EP 0 620 332 A1**
(43) Date de publication de la demande: **19.10.1994**
(21) Numéro de dépôt: 94810180.3
(22) Date de dépôt: 23.03.1994
(51) Int. Cl.: E04B 1/26, F16B 12/04, C09J 163/00, C08K 3/34

(54) **Procédé de réalisation d'un assemblage de pièces de bois et composition à base de résine époxy pour la mise en oeuvre de ce procédé**

(30) Priorité: 24.03.1993 CH 893/93
(71) Demandeur: FERWOOD S.A., CH-1430 Orges (CH)
(72) Inventeur: Lacroix, René, CH-1814 La Tour-de-Peilz (CH); Oguey, René, CH-1422 Grandson (CH); Ducret, Jean-Louis, CH-1430 Orges (CH); Holzhäuser, Kurt, CH-1024 Ecublens (CH)
(74) Mandataire: Ganguillet, Cyril

(57) **Abrégé**

L'assemblage de pièces de bois (1) est réalisé au moyen d'armatures métalliques (3) telles que des fers à béton, qui restent totalement internes à la construction, ce qui permet d'éliminer tous les inconvénients liés au boulonnage d'assemblages en bois. Pour la fixation des pièces d'armatures (3) avec les pièces de bois (1), on enrobe l'armature (3) d'une masse de résine thermodurcissable contenant une charge comportant des éléments minéraux lamellaires. La présence de ces éléments lamellaires dans la charge permet de conférer au mélange de résine et de charge, avant son durcissement, une fluidité suffisante, pour qu'il puisse être coulé dans des interstices de petites dimensions, tout en évitant la sédimentation de la charge.

## Description

La présente invention concerne un procédé de réalisation d'un assemblage de pièces de bois, ainsi qu'une composition à base de résine époxy pour la mise en oeuvre de ce procédé.

On connaît divers procédés dans lesquels on utilise des barres ou du mortier d'époxy pour fixer des pièces de bois en vue de leur restauration. Par exemple, le brevet européen no 0141782, ainsi que le brevet britannique GB 2060044 A décrivent des procédés selon lesquels des barres d'armatures métalliques sont noyées dans une masse de mortier à base de résine époxy qui est utilisée comme tampon entre l'armature métallique et le bois, ceci afin d'éviter une juxtaposition trop étroite de l'armature métallique et du bois risquant de conduire à une confrontation de leurs propriétés mécaniques et à une rupture de leur liaison, ainsi qu'à celle du bois.

La transposition des techniques de ce genre, utilisées dans le domaine de la rénovation de structures et de constructions en bois, à la réalisation d'assemblages à armatures internes en utilisant des éléments neufs, tels que des poutres et des pièces de bois en lamellés-collés pose de nombreux problèmes.

En effet, pour la réalisation d'assemblages de pièces de construction en bois à armature interne, il est souhaitable que l'armature prenne ancrage de manière très précise dans chacune des pièces à assembler tout en évitant de devoir créer dans ces pièces de bois des logements de grandes dimensions dont la présence diminue la résistance mécanique propre du bois. Il faut donc réduire la différence de diamètre entre les pièces d'armature et leurs logements à une valeur de l'ordre de quelques millimètres de sorte que, pour permettre un enrobage satisfaisant de l'armature dans le mortier d'époxy, ce dernier doit avoir une fluidité suffisante pour pouvoir être introduit dans des conduits et des interstices de petites dimensions.

D'autre part, l'épaisseur de la masse de résine époxy intercalée entre l'armature métallique et le bois est plus faible que dans le cas des techniques connues de rénovation de pièces de bois, de sorte qu'il est difficile de disposer d'une épaisseur de résine suffisante pour assurer, à elle seule, une transition harmonieuse entre les propriétés mécaniques du bois et celles de l'armature.

Plus précisément, les propriétés requises pour la masse de résine d'enrobage de l'armature sont en partie contradictoires entre elles.

En effet, cette masse doit notamment présenter le propriétés suivantes:
- avoir une viscosité suffisamment faible pour pouvoir couler dans des conduits et interstices étroits et pénétrer jusque dans les anfractuosités, c'est-à-dire combler totalement l'espace vide;
- la sélection et le dosage des composants de charge doivent être adaptés afin que les propriétés mécaniques de la masse de résine soient proches de celles du bois, de manière à assurer, malgré une faible épaisseur, la transition harmonieuse entre les propriétés mécaniques de l'armature et celles du bois;
- avoir la viscosité souhaitable, mais celle-ci ne peut pas être obtenue par l'adjonction d'un solvant, car celui-ci resterait partiellement inclus dans les conduits lors du durcissement, et sa présence pourrait entraîner des phénomènes de retrait et diminuerait les propriétés mécaniques de la résine durcie;
- elle ne doit pas contenir d'additifs volatils; pouvant entraîner des effets négatifs, cités ci-dessus;
- elle doit avoir une thixotropie adaptée pour éviter la sédimentation des particules de quartz qui seront ajoutées ensuite, la répartition des particules de quartz devant être idéalement homogène;
- cette thixotropie ne peut pas être atteinte par une augmentation proportionnelle de la quantité d'agents de thixotropie habituels, car cela diminuerait les propriétés mécaniques de façon trop importante.
- une fois le mélange durci, celui-ci doit faire preuve d'une élasticité plus importante que tout mélange comparable connu à ce jour.

L'emploi des mortiers à base de résines thermodurcissables, en particulier des résines époxy, de l'art antérieur ne permet pas de résoudre les problèmes susmentionnés et les essais entrepris jusqu'à présent ont tous conduit à un même résultat: à savoir l'arrachage des fibres du bois dans la zone de contact avec la masse de résine et la rupture de la liaison entre le bois et cette masse.

L'invention a pour but de permettre de résoudre lesdits problèmes en éliminant les inconvénients indiqués ci-dessus.

A cet effet, le procédé selon l'invention est tel que spécifié dans la revendication 1.

L'invention concerne également une composition, à base de résine époxy, pour la mise en oeuvre de ce procédé, présentant les caractéristiques spécifiées dans la revendication 11.

Des caractéristiques supplémentaires facultatives de cette composition sont spécifiées dans les revendications 12 à 17.

L'invention sera mieux comprise grâce à la description détaillée, qui va suivre, de la mise en oeuvre du procédé selon l'invention, en se référant au dessin annexé dans lequel:
la figure 1 est une vue schématique illustrant le principe du procédé d'assemblage selon l'invention;
la figure 2 est une vue en perspective d'une poutre assemblée par le procédé selon l'invention;

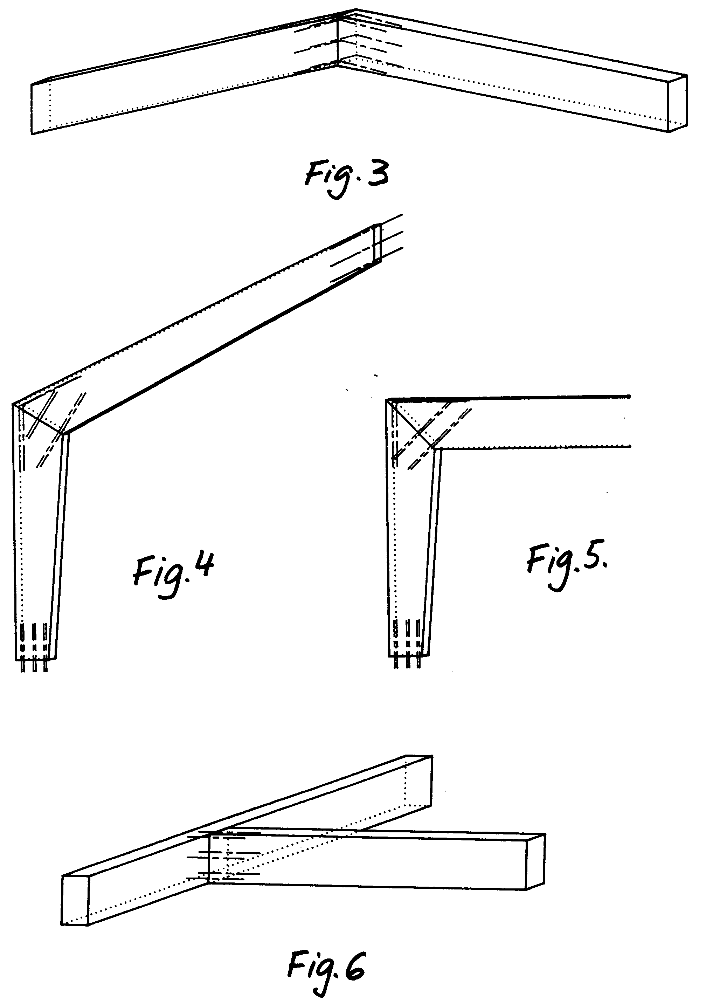

la figure 3 est une vue en perspective d'un joint de poutre réalisé par le procédé selon l'invention;
la figure 4 est une vue en perspective illustrant un angle de cadre avec un joint de faîtage et un pied de colonne, également réalisés par le procédé selon l'invention;
la figure 5 est une vue en perspective illustrant un angle de cadre et un pied de colonne, réalisés par le procédé selon l'invention;
la figure 6 est une vue en perspective d'un joint de solive réalisé par le procédé selon l'invention;
la figure 7 est une vue en perspective d'une grille de poutre en plan réalisée par le procédé selon l'invention;
la figure 8 est une vue en perspective d'une grille de poutre spatiale réalisée par le procédé selon l'invention;
la figure 9 est une vue en perspective d'un renforcement d'arc réalisé par le procédé selon l'invention;

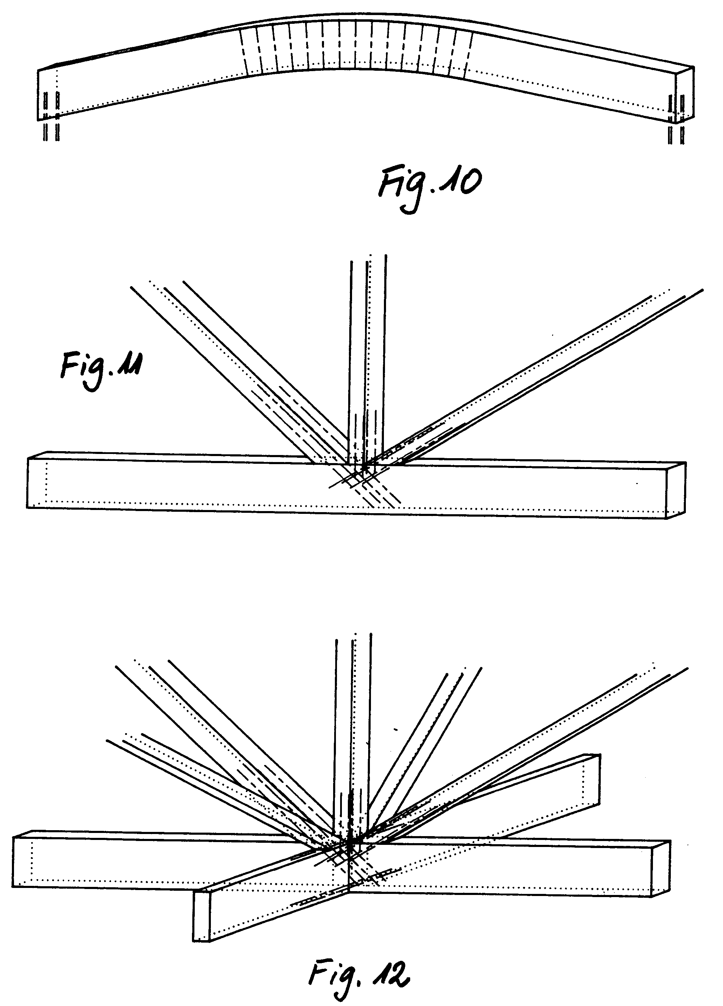

la figure 10 est une vue en perspective d'un renforcement d'arc avec appui d'extrémité, réalisé par le procédé selon l'invention;
la figure 11 est une vue en perspective d'un treillis plan réalisé par le procédé selon l'invention; et
la figure 12 est une vue en perspective d'un treillis spatial réalisé par le procédé selon l'invention.

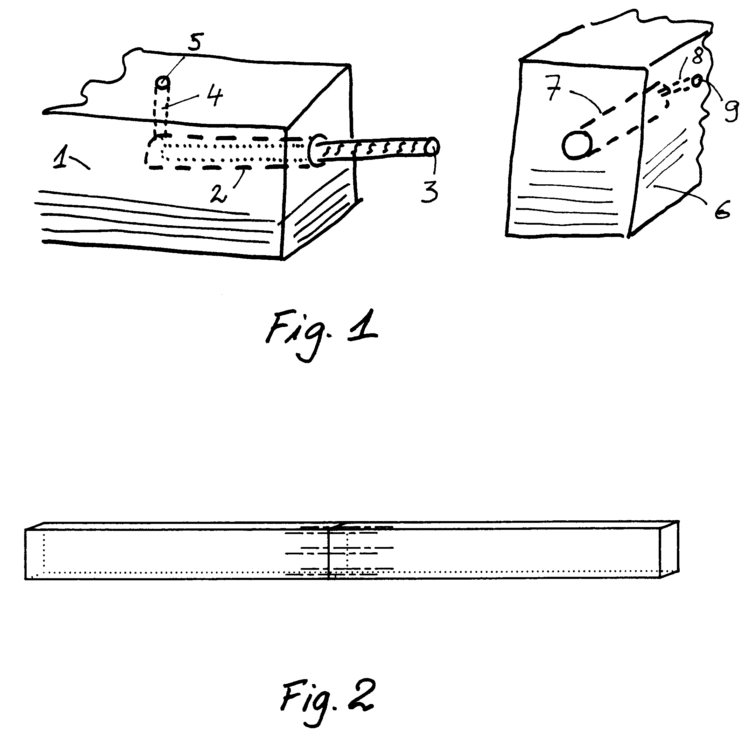

En se rapportant à la figure 1, on décrit ci-dessous le procédé de fabrication d'un assemblage, en prenant d'abord comme exemple l'assemblage le plus simple. Il faut cependant noter que même pour les assemblages les plus complexes, tels celui de la figure 12, la technique reste fondamentalement la même.

Sur la figure 1, on distingue la première partie d'une poutre en lamellé-collé 1. On voit également un logement 2. En l'occurrence, il s'agit d'un simple trou réalisé avec une perceuse. A l'intérieur du logement 2, on mettra plus tard en place un fer à béton 3. On réalise avec une mèche, plus petite que la précédente, un conduit 4 qui relie le fond du logement 2 à la surface supérieure de la poutre de sorte que l'orifice 5 du conduit 4 débouche dans cette surface.

On pratique exactement les mêmes opérations, en ce qui concerne la deuxième partie 6 de la poutre à assembler, et l'on réalise ainsi un logement 7, et un conduit 8. Il faut s'arranger pour que l'orifice 9 du conduit 8 de la deuxième partie de la poutre soit en position plus basse que l'orifice du conduit de la première partie. En fait, il faut que l'orifice dans lequel on introduira le mélange de résine soit plus haut que l'autre orifice pour que l'écoulement puisse avoir lieu.

Selon que l'ensemble de la poutre à assembler peut être déplacé ou non, on pourra soit incliner la poutre soit s'arranger pour que l'orifice par lequel on introduit le mélange de résine soit plus haut que l'orifice ou les orifices de sortie.

On met bout à bout les deux parties de la poutre à assembler, en confinant le fer à béton dans les deux parties de son logement.

Une fois les préparatifs ci-dessus exécutés, on réalise un mélange de résine selon la variante A décrite ci-dessous puis on introduit ledit mélange en le versant dans l'orifice correspondant. Lorsque la résine apparaît à l'autre (aux autres) orifice(s), on sait que le mélange à comblé tout l'espace vide et l'on cesse l'introduction du mélange. Il suffit alors de laisser le processus de durcissement suivre son cours et donner le fini souhaité à la surface de la poutre.

Pour donner une idée du résultat obtenu grâce à la technique selon l'invention, on indique ci-dessous les paramètres d'un test réel qui a été réalisé, ainsi que les résultats de ce test.

Il est préalablement rappelé qu'une poutre d'une section de 12 cm de large sur 33 cm de haut, d'une portée de 3 mètres, cède à une charge d'environ 24 tonnes appliquée symétriquement à raison de 12 tonnes au premier et au deuxième tiers de la portée.

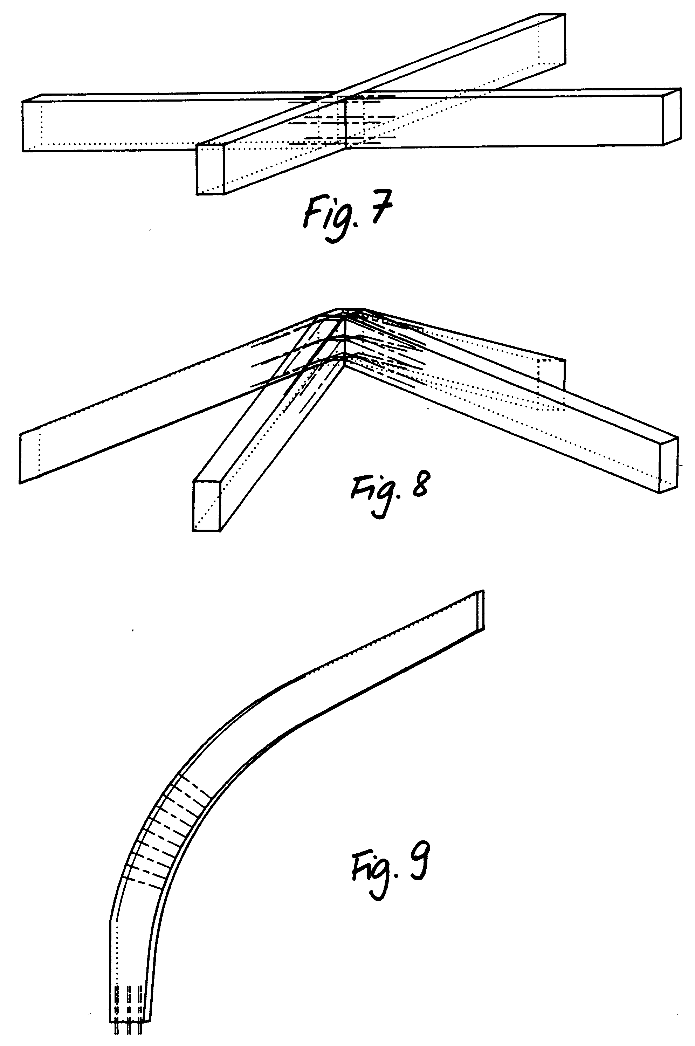

Un assemblage tel que celui représenté à la figure 7 a été réalisé au moyen d'une poutre en lamellé-collé de 12 x 33 x 300 cm et de deux éléments de poutre de même structure et de même section ayant chacun une longueur de 144 cm. La poutre de 300 cm a été pourvue de quatre percements transversaux de 18 mm de diamètre. Quatre logements de 18 mm de diamètre ont aussi été pratiqués, en regard des percements, dans chacun des deux éléments de poutre de 144 cm. On pratique bien sûr des conduits pour l'introduction du mélange de résine et pour la vérification du plein remplissage de l'espace vide.

L'ensemble a été assemblé en enfermant quatre fers à béton (communs) de 12 mm de diamètre et de 52 cm de long dans les logements. Les fers sont centrés dans leur logement au moyen de cales. On a ensuite coulé le mélange de résine mentionné ci-dessous sous la variante A.

La grille de poutre en plan ainsi réalisée forme une croix rectangulaire parfaite de trois mètres de portée. Les extrémités de la croix ont été placées sur quatre appuis. On a ensuite procédé à une mise en charge appliquée en quatre points situés à la moitié de la portée de chacune des branches de la croix.

La rupture a eu lieu pour une charge totale de 48 tonnes, appliquée en quatre fois 12 tonnes. La rupture s'est produite par un éclatement généralisé constaté aussi bien dans les parties non armées que dans la zone armée.

Ainsi, les poutres assemblées présentent les mêmes caractéristiques mécaniques que les poutres de départ. Il n'y a donc pas de perte. Pour exprimer cette constatation d'une autre façon, on peut dire que l'assemblage présente les mêmes caractéristiques qu'une poutre imaginaire formant une croix d'un seul tenant.

D'autres essais ont été réalisés sur des assemblages de treillis plans tels que celui de la figure 11. Les mêmes constatations on pu être enregistrées et l'on a même relevé une particularité supplémentaire inattendue. En effet, la réalisation de tels treillis plans, que ce soit en acier, en béton ou en bois, conduit toujours à un écart significatif entre la flèche théorique calculée et la flèche réelle effectivement mesurée.

Avec un assemblage de treillis plan selon le procédé décrit ci-dessus, l'écart entre la flèche théorique et la flèche mesurée a toujours été inférieur à 5%.

Comme mentionné plus haut, la réalisation d'assemblages en bois grâce à des armatures internes n'était pas possible jusqu'ici notamment parce que l'on ne disposait pas d'un matériau capable d'assurer une liaison fiable et durable entre les armatures et le bois sans occuper lui-même un volume trop important.

Pour la préparation du mortier à base de résine thermodurcissable utilisé pour la mise en oeuvre du procédé selon l'invention, on peut utiliser avantageusement comme base une résine époxy modifiée, relativement liquide, soit qu'elle incorpore déjà un diluant réactif, soit que l'adjonction d'un diluant réactif soit autorisée. En tout état de cause, le diluant réactif (par exemple du type éther glycidique) ne devra pas représenter plus de 10% de la quantité de résine de base.

Pour préparer la masse de mortier fluide on peut, par exemple, ajouter, en deux étapes, à cette résine de base, les ingrédients suivants:
- pigments colorés (oxyde de fer): 5% à 6% (dans la mesure ou l'on veut obtenir une coloration)
- agents anti-moussants 0,1%
- agents de rhéologie (choisis, par exemple parmi la silice pyrogénée, les composés du type uréthane et les dérivés organiques de la smectite, plus particulièrement la smectite modifiée par traitement avec un composé organique du type ammonium quaternaire: 1%
- charges à composants minéraux imbriqués à texture lamellaire
- une charge réactive
- polyphosphate d'ammonium pour la protection contre le feu: 30%

La charge à composants minéraux imbriqués à texture lamellaire vise à créer, dans la préparation de résine, une sorte de trame tridimensionnelle souple. Lorsqu'on mélangera, dans une étape ultérieure de préparation, la farine ou le sable de quartz à la préparation de résine, la trame tridimensionnelle empêchera la sédimentation des particules de quartz et maintiendra une dispersion homogène de celles-ci lors de l'application.

Pour parvenir à cet effet de trame, il est nécessaire que la charge comporte des composants lamellaires. Par exemple on peut utiliser une charge constituée d'une imbrication de mica, de quartz et d'hydrosilicate de magnésium et d'aluminium (Chlorite). Les composants lamellaires, à savoir le mica et l'hydrosilicate de magnésium et d'aluminium, peuvent avoir une surface rugueuse et se présentent sous forme de plaquettes plates dont les dimensions en plan atteignent au moins 30 microns en moyenne, en largeur comme en longueur.

La caractéristique lamellaire de ces constituants de la charge conduit à des propriétés mécaniques supérieures à celles que l'on obtiendrait avec du quartz seul, cela en particulier en ce qui concerne l'élasticité qui est l'un des facteurs essentiels recherchés et qui permet la réduction de la masse nécessaire pour enrober l'armature sans affecter pour autant l'obtention d'une transition harmonieuse entre l'armature et le bois.

Pour obtenir la préparation de résine selon l'invention, on peut avantageusement commencer par mélanger, dans un mélangeur rapide, 10% de la résine de base, les pigments, l'agent anti-moussant et l'agent de rhéologie et, dans un deuxième temps, incorporer, à l'aide d'un mélangeur lent, les 90% restants de la résine de base, ainsi que la charge décrite plus haut.

Une fois le mélange rendu homogène, on dispose de la préparation de résine désirée.

Bien que, comme indiqué plus haut, l'élaboration de la préparation de résine vise avant tout à permettre des assemblages de pièces de bois au moyen d'armatures métalliques internes confinées dans des logements étroits, les propriétés de thixotropie et de trame tridimensionnelle de la préparation de résine peuvent également présenter des avantages dans d'autres applications.

Selon l'application pour laquelle on entend utiliser la préparation de résine, on additionnera et mélangera de la farine ou du sable de quartz dont les proportions et la granulométrie varient en fonction de l'application en cause.

Dans la suite de cette description, on désigne par les termes de "mélange de résine" le produit final, prêt à l'utilisation, soit la préparation de résine à laquelle on a additionné de nouveaux éléments de charge et le durcisseur.
A. Pour le collage d'armatures internes, en particulier dans le but de réaliser des assemblages en bois, le mélange de résine est obtenu en mélangeant:
   - la préparation de base,
   - le durcisseur (selon les indications du fabricant)
   - du sable ou de la farine de quartz d'un volume représentant 50% du volume additionné de la préparation de résine et du durcisseur. La granulométrie du quartz étant préférablement comprise entre 0.08 mm et 0.2 mm.
B. Pour réaliser un "mortier", à couler en coffrage, c'est-à-dire sans nécessité que le mélange pénètre dans des conduits étroits, on mélange:
   - la préparation de base,
   - le durcisseur (selon les indications du fabricant de la résine de base)
   - du sable de quartz de différentes granulométries selon le tableau ci-dessous, les quantités étant exprimées relativement au volume additionné de la préparation de résine et du durcisseur:
      - de 0.08 à 0.2 mm environ 10%
      - de 0.7 à 1.2 mm environ 30%
      - de 3.0 à 3.5 mm environ 30%
      - de 5.0 à 7.0 mm environ 30%
C. Pour le masticage des fentes, le collage des coffrages ou le remplissage de pièces de bois:
   - la préparation de base
   - le durcisseur (selon les indications du fabricant de la résine de base)
   - du sable ou de la farine de quartz d'un volume représentant 50% du volume additionné de la préparation de résine et du durcisseur. La granulométrie du quartz pouvant être comprise entre 0.08 mm et 0.2 mm
   - l'agent de rhéologie, à raison de 100% du volume additionné de la préparation de base et du durcisseur.

Dans les trois cas d'application décrit ci-dessus, il convient de relever que, lors de la réaction chimique provoquant le durcissement, l'élévation de température, bien que relativement faible en raison de la présence de la charge, conduit à une chute de viscosité. Cependant, la progression du durcissement compense la chute de viscosité au fur et à mesure de la réaction, de sorte que la distribution homogène des particules de quartz est préservée.

Les propriétés de la préparation de résine et du mélange de résine selon l'invention ont certes été recherchées et réalisées dans le but de permettre les assemblages en bois, mais l'on peut également utiliser la préparation et les mélanges en vue d'autres applications.

Les assemblages en bois selon l'invention ont des avantages multiples dont les principaux semblent être les suivants:
- dans les types de construction qui font appel à des assemblages en bois réalisés habituellement avec des vis et des boulons, on pourra éliminer totalement le problème de la corrosion de ces pièces métalliques exposées à l'air libre; on pourra aussi, pour une même capacité de charge, réduire la taille la section des poutres qui était le plus souvent déterminée par l'affaiblissement dû aux percements et aux boulonnages; on éliminera aussi les risques de pourriture du bois par infiltration d'humidité par les percements ouverts à l'air libre pour le passage des boulonnages;
- le procédé permet d'ouvrir aux structures en bois des horizons auxquels elle n'avait pas accès jusqu'ici. On pourra adopter des assemblages en bois là où seuls des assemblages métalliques étaient envisageables jusqu'ici; on réduira ainsi de façon sensible le prix des constructions concernées;
- l'invention permet aussi une réalisation en atelier des assemblages, ce qui conduit à une plus grande précision et à une réduction substantielle des coûts;
- qu'il s'agisse de constructions traditionnellement en bois ou de nouveaux champs d'application ouverts par l'invention, le problème de l'ancrage des poutres dans le sol ou dans les parois d'un édifice trouve enfin une solution grâce à la possibilité d'ancrer directement les fers à béton solidaires de la poutre dans le sol ou dans la paroi;
- l'esthétique des constructions en bois et des assemblages de poutres sera d'autant plus belle qu'aucun élément étranger apparent ne sera plus nécessaire;
- la solidité et la durabilité des constructions en bois et des assemblages de poutres sont largement augmentées grâce à l'invention;
- les coûts de construction sont diminués grâce à l'invention, d'une part parce qu'elle permet d'étendre le champ d'application du bois et d'autre part parce qu'elle permet l'utilisation de matériaux aussi communs et bon marché que des fers à béton;
- enfin, par rapport à des assemblages réalisés en utilisant des armatures en fibre de verre ou similaire, le gain de résistance que représente l'utilisation du métal ou d'un matériau aux propriétés similaires est spectaculaire. Ce gain peut s'exprimer de deux façons. Soit l'on peut mettre un fer à béton d'une section bien moindre que celle d'une tige de fibre de verre pour la même résistance. Soit on peut disposer dans une section de poutre donnée davantage de fers à béton sans entamer pour autant la résistance propre du bois, qui dépend finalement du nombre des fibres entières et donc de la section des trous qu'on y pratique.

## Revendications

1. Procédé de réalisation d'un assemblage de pièces de bois, caractérisé en ce que l'on forme, dans chacune des pièces à assembler, au moins un logement borgne allongé relié par au moins un canal avec l'extérieur de la pièce, on dispose l'une contre l'autre les pièces à assembler en plaçant au moins un logement d'une pièce dans le prolongement d'un logement d'une autre pièce, avec les ouvertures de ces logements en coïncidence, après avoir disposé une partie d'une pièce d'armature à l'intérieur de l'un des logements et le reste de cette pièce d'armature dans au moins un logement d'une autre pièce de bois, on introduit, par au moins l'un desdits canaux, une masse fluide de résine thermodurcissable, contenant une charge comprenant des particules d'au moins une matière minérale sous forme de plaquettes, uniformément répartie dans la masse de la résine, de manière que cette masse remplisse au moins l'espace compris entre la pièce d'armature et les parois desdits logements, et on provoque ou on permet la solidification de la masse de résine de façon à assurer la solidarité entre la pièce d'armature et les pièces de bois.

2. Procédé selon la revendication 1, caractérisé par le fait que ladite charge est constituée par un mélange de particules de quartz et de plaquettes d'au moins une matière lamellaire choisie parmi le mica et la chlorite.

3. Procédé selon la revendication 2, caractérisé par le fait que les proportions respectives des plaquettes de mica, particules de quartz et plaquettes de chlorite, ainsi que la proportion totale de matière de charge dans la masse de résine sont telles que ces plaquettes et particules sont mutuellement imbriquées en formant un réseau tridimensionnel.

4. Procédé selon la revendication 2 ou la revendication 3, caractérisé par le fait que la valeur moyenne d'au moins l'une des dimensions de chaque plaquette de mica et/ou de chlorite est de l'ordre de 30 microns.

5. Procédé selon l'une des revendications 1 à 4, caractérisé par le fait que ladite résine est une résine époxy.

6. Procédé selon l'une des revendications 1 à 5, caractérisé par le fait que ladite pièce d'armature est une pièce métallique.

7. Procédé selon l'une des revendications 1 à 6, caractérisé par le fait que ledit logement est de forme cylindrique et que son diamètre est au plus égal au double de celui de la pièce d'armature qu'il est destiné à recevoir.

8. Procédé selon la revendication 5, caractérisé par le fait que la masse de résine époxy comprend au moins un agent durcisseur.

9. Procédé selon l'une des revendications 1 à 8, caractérisé par le fait que la masse de résine comprend au moins un agent modificateur de ses propriétés rhéologiques.

10. Procédé selon les revendications 5 et 9, caractérisé par le fait que l'agent modificateur des propriétés rhéologiques est choisi parmi la silice finement divisée, les uréthanes et la smectite modifiée par traitement avec un composé organique du type ammonium quaternaire.

11. Composition, à base de résine époxy, pour la mise en oeuvre du procédé selon la revendication 1, caractérisée par le fait qu'elle contient une charge comprenant des particules d'au moins une matière lamellaire sous forme de plaquettes, uniformément répartie dans la masse de la résine.

12. Composition selon la revendication 11, caractérisée par le fait que ladite charge est constituée par un mélange de particules de quartz et de plaquettes d'au moins une matière lamellaire choisie parmi le mica et la chlorite.

13. Composition selon la revendication 12, caractérisé par le fait que les proportions respectives des plaquettes de mica, particules de quartz et plaquettes de chlorite, ainsi que la proportion totale de matière de charge dans la masse de résine sont telles que ces plaquettes et particules sont mutuellement imbriquées en formant un réseau tridimensionnel.

14. Composition selon la revendication 12, caractérisé par le fait que la valeur moyenne d'au moins l'une des dimensions de chaque plaquette de mica et/ou de chlorite est de l'ordre de 30 microns.

15. Composition selon la revendication 11, caractérisé par le fait que la masse de résine époxy comprend au moins un agent durcisseur.

16. Composition selon l'une des revendications 11 à 15, caractérisé par le fait que la masse de résine comprend au moins un agent modificateur de ses propriétés rhéologiques.

17. Composition selon la revendication 16, caractérisé par le fait que l'agent modificateur des propriétés rhéologiques est choisi parmi la silice finement divisée, les uréthanes et la smectite modifiée par traitement avec un composé organique du type ammonium quaternaire.
